# EUROPEAN PATENT SPECIFICATION

(11) **EP 1 069 291 B1**
(45) Date of publication and mention of the grant of the patent: **24.11.2004**
(21) Application number: 00111713.4
(22) Date of filing: 31.05.2000
(51) Int. Cl.: F02B 23/10

(54) **In-cylinder direct-injection spark-ignition engine**
Direkteinspritzbrennkraftmaschine mit Fremdzündung
Moteur à injection directe et à allumage commandé

(30) Priority: 07.06.1999 JP 15921499
(43) Date of publication of application: 17.01.2001
(73) Proprietor: Nissan Motor Co., Ltd., Yokohama-shi, Kanagawa 221-0023 (JP)
(72) Inventor: Itou, Yasuyuki, Yokohama-shi, Kanagawa 240-0032 (JP); Urushihara, Tomonori, Yokohama-shi, Kanagawa 236-0026 (JP); Iriya, Yuichi, Yokohama-shi, Kanagawa 223-0053 (JP); Fukuda, Takashi, Yokohama-shi, Kanagawa 236-0033 (JP)
(74) Representative: Weber, Joachim, Dr.

(56) References cited:
- EP-A- 0 778 402
- EP-A- 0 875 670
- EP-A- 0 879 941
- DE-A- 19 730 842
- DE-A- 19 809 066
- DE-A- 19 928 108
- US-A- 5 775 288

## Description

### BACKGROUND OF THE INVENTION

### Field of the Invention

The present invention relates to the improvements of an in-cylinder direct-injection spark-ignition internal combustion engine equipped with an open combustion chamber type piston in which fuel is injected directly into engine cylinders and it is ignited by an electric spark, and specifically to techniques for effectively producing strong stable tumble flow for stable combustion (particularly, stable stratified charge combustion), and capable of improving exhaust emission.

### Description of the Prior Art

In recent years, there have been proposed and developed various direct-injection spark-ignition engines in which fuel is injected directly into the engine cylinders. Generally, on such direct-injection spark-ignition engines, a combustion mode is changeable between a homogeneous combustion mode (an early injection combustion mode) where fuel-injection early in the intake stroke produces a homogeneous air-fuel mixture, and a stratified charge combustion mode (a late injection combustion mode) where late fuel-injection delays the event until near the end of the compression stroke to produce a stratified air-fuel mixture. Such stratified charging or stratified combustion mode is effective under a low engine-load operating condition where the amount of fuel injected is comparatively less. In contrast to the above, during high engine-load operation where the amount of fuel sprayed out is comparatively great due to demands for more engine power or more engine output torque, there is less requirement for stratified charging, and in lieu thereof it is necessary to form more uniform air-fuel mixture layers, particularly in order to avoid the engine from knocking. One such direct-injection spark-ignition engine has been disclosed in Japanese Patent Provisional Publication No. 9-317479.

### SUMMARY OF THE INVENTION

The direct-injection spark-ignition engine disclosed in the Japanese Patent Provisional Publication No. 9-317479, has a spark plug centrally located at a center of the combustion chamber, a fuel injector located at a side wall portion of the combustion chamber and near an intake valve disposed in an intake port, and a piston having a piston bowl cavity combustion chamber in a piston crown. The engine disclosed in the Japanese Patent Provisional Publication No.9-317479 is operable in a stratified charge combustion mode where fuel injection is executed on a compression stroke while introducing a reverse tumble flow to an induced air drawn into the combustion chamber through the intake port. Such a piston bowl cavity acts to promote strong tumble flow. The above reverse tumble flow is a vertical-vortex tumble flow being directed downward from the intake valve, flowing via the vicinity of the fuel injector toward the piston crown, then turned reversely along the piston bowl cavity, and thus directed toward the spark plug. Also, the piston bowl cavity is dimensioned so that the angle between opposite side edge portions of the piston bowl cavity, gradually widening in a direction along a line extending from the intake valve side to the center of the piston crown (or in a direction along streamlines of the tumble flow along the bowl cavity), is substantially equal to a fuel-spray angle. The angle between opposite side edge portions of the piston bowl cavity will be hereinafter referred to as a "bowl-cavity opposite-side-edges tapering angle". Owing to such reverse tumble flow, there is a possibility of spray/wall impingement between fuel spray and the wall surface of the piston ball cavity. Owing to such impingement of fuel spray on the piston bowl cavity, there is an increased tendency for the incoming fuel to adhere to the piston-bowl-cavity combustion chamber wall in the form of a fuel film, and as a rapid carbonization could occur, thus deteriorating an exhaust-emission control performance by the increased amount of exhaust emissions such as smoke and particulate matter (PM) and by formation of unburned hydrocarbons (HCs). The adhered fuel film on the ball cavity results in undesired deposits in the engine, thus resulting in engine power loss and reduced piston life. Additionally, owing to the previously-discussed bowl-cavity opposite-side-edges tapering angle dimensioned to be substantially equal to the spray angle, the engine includes difficulty in concentrating the fuel spray in a desired point while the fuel is guided by the piston bowl cavity having the above-mentioned structural dimensions and geometry and carried on the reverse tumble flow. In other words, there is a possibility of undesired fuel-spray dispersion during the stratified combustion mode. This means that the fuel spray, injected from the injector on the compression stroke during the stratified charge combustion mode, cannot be certainly carried on the reverse tumble flow and delivered to the vicinity of the tip of the spark plug. Additionally, the end of the piston bowl cavity, facing to the exhaust valve side, is slightly raised, and thus there is an increased tendency for the fuel spray injected to collide with or impinge on the slightly-raised portion of the piston crown. This deteriorates fuel economy and lowers engine's output power.

Accordingly, it is an object of the invention to provide an in-cylinder direct-injection spark-ignition engine which avoids the aforementioned disadvantages of the prior art.

It is another object of the invention to provide an in-cylinder direct-injection spark-ignition engine having specified piston-bowl-cavity dimensions and geometry, capable of avoiding undesired spray/wall impingement by way of normal tumble flow opposite in rotation from the previously-discussed reverse tumble flow, and of certainly reliably carrying the fuel spray on the normal tumble flow and delivered to the vicinity of a tip of a spark plug to create a richer air/fuel mixture layer around the spark plug, by efficiently concentrating air flow (the normal tumble flow) in a desired point as much as possible.

It is a further object of the invention to provide an in-cylinder direct-injection spark-ignition engine having specified piston-bowl-cavity dimensions and geometry, capable of ensuring a good normal tumble flow control performance and a good delivery of a small very rich layer of air-fuel mixture toward around a spark plug, and enhancing a stratified charge combustion stability by way of an optimally-controlled fling-up action, during a stratified combustion mode. The optimally-controlled fling-up action is obtained by full cooperation of a strong in-cylinder normal tumble flow concentrating to a desired point and a relatively wide angle between opposite side edge portions of the piston bowl cavity, gradually widening in a direction along a line extending from the intake valve side to the center of the piston crown or gradually narrowing in a direction along the normal tumble-flow streamline on the bowl cavity, as compared to a fuel-spray angle.

In order to accomplish the aforementioned and other objects of the present invention, a direct-injection spark-ignition engine operable in at least a stratified charge combustion mode where fuel injection is executed on a compression stroke while introducing a vertical-vortex tumble flow to an induced air drawn into a combustion chamber through an intake port, comprises a cylinder block having a cylinder, a piston movable through a stroke in the cylinder and having a piston bowl cavity combustion chamber in a piston crown, a cylinder head mounted on the cylinder block, a spark plug centrally located at a center of the combustion chamber, and a fuel injector valve provided at a side wall portion of the combustion chamber and near an intake valve disposed in the intake port for injecting fuel directly into the combustion chamber. The piston bowl cavity combustion chamber is formed in the piston crown for producing a normal tumble flow being directed toward a vicinity of said fuel injector valve and then directed toward a vicinity of the spark plug while being guided by the piston bowl cavity combustion chamber. The width of the piston bowl cavity combustion chamber is relatively wide at an exhaust valve side and relatively narrow at an intake valve side. A depth of the piston bowl cavity combustion chamber is relatively shallow at the exhaust valve side and relatively deep at the intake valve side.

### BRIEF DESCRIPTION OF THE DRAWINGS

Fig. 1 is a cross section illustrating an embodiment of an in-cylinder direct-injection spark-ignition internal combustion engine having a piston formed with a bowl-shaped piston cavity.
Fig. 2 is a top view of the piston of the engine of the embodiment, having the improved bowl-in-piston combustion chamber structure.
Fig. 3 is a perspective view showing the piston crown portion of the engine of the embodiment.
Fig. 4 is a graph illustrating the relationship between an air/fuel mixture ratio (A/F) and a rate of change in indicated mean effective pressure, and showing the difference of lean misfire limit between the prior art engine and the improved engine.

### DESCRIPTION OF THE PREFERRED EMBODIMENTS

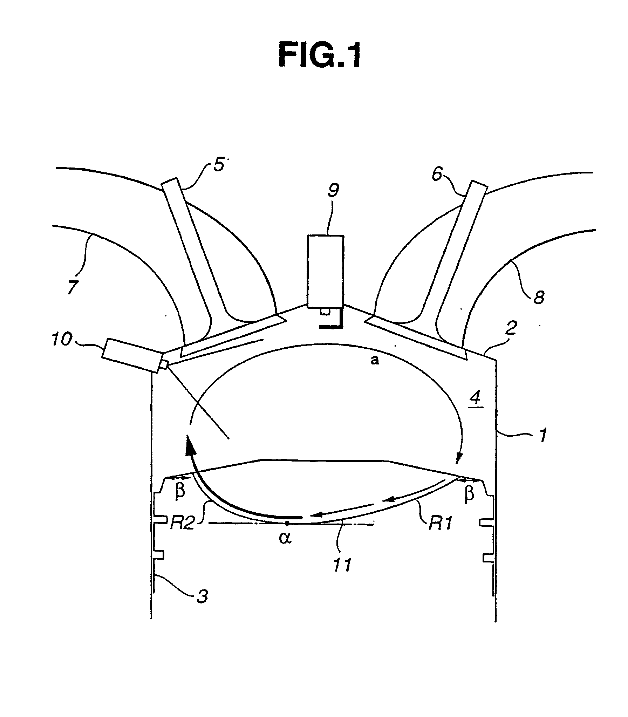

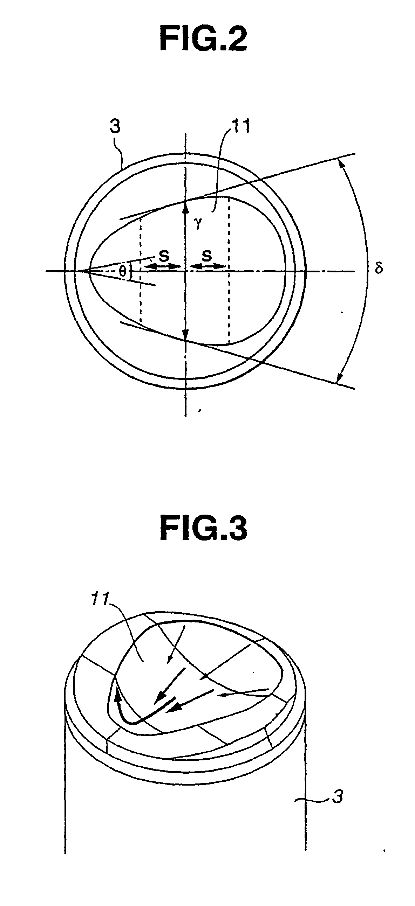

Referring now to the drawings, particularly to Fig. 1, the in-cylinder direct-injection spark-ignition engine of the invention is exemplified in a four-valve, gasoline-fuel, spark-ignition internal combustion engine having a pent-roof combustion chamber. As shown in Fig. 1, in the direct-injection spark-ignition engine of the embodiment, the ignition plug (the spark plug) 9 is located essentially at the center of the combustion chamber 4. The cylinder head 2 is mounted on a cylinder block 1 having an engine cylinder. A piston 3 is provided in the cylinder to be movable through a stroke in the cylinder. The combustion chamber 4 is defined by the cylinder wall of the cylinder block 1, the bottom face of the cylinder head 2, and the top surface (or the piston crown or the piston head) of the piston 3. The engine is equipped with two intake ports (7, 7), offsetting from the center axial line of the cylinder bored in the cylinder block 1. As clearly seen in Fig. 2, the cylinder head 2 is equipped with two intake valve ports (7, 7), offsetting from the center axial line of the cylinder formed in a cylinder block 1, and two exhaust valve ports (8, 8), offsetting from the center axial line of the cylinder in the opposite direction to positions of the intake ports. As appreciated from Fig. 1, the engine has a so-called cross-flow port structure. Two intake valves (5, 5) are disposed in the respective intake ports (7, 7) to open and close them, whereas two exhaust valves (6, 6) are disposed in the respective exhaust ports (8, 8) to open and close them. A fuel-injector valve 10 is provided in a side wall portion of the combustion chamber 4 and in the vicinity of the substantially middle portion of two downstream opening ends of the intake ports (7, 7), so as to inject or spray out fuel directly into the combustion chamber 4. Each of the intake ports (7, 7) is contoured to easily affect sufficient turbulent action, that is, a strong normal tumble flow (denoted by a in Fig. 1) to the air-fuel mixture, in the form of a vertical vortex (in-cylinder normal tumble flow) tumbling within the combustion chamber 4. The strong normal tumble flow indicated by the arrow a in Fig. 1, is a vertical-vortex tumble flow being directed upward from the intake valve, flowing via the vicinity of the fuel injector 10 toward the piston crown, and then turned reversely along a bowl-shaped piston bowl cavity combustion chamber 11 (fully described later), and thus directed toward the vicinity of the tip of the spark plug 9. As shown in Figs. 1, 2, and 3, the bowl-shaped piston cavity combustion chamber (simply, a piston bow cavity) 11 is formed in the piston crown of the piston 3. The piston bowl cavity 11 functions as a tumble-flow guide groove. Therefore, the normal tumble flow a is guided by virtue of the piston bowl cavity 11 of the piston 3, and thus directed to the vicinity of the tip of the spark plug 9. Structural details of the piston bowl cavity 11 are hereunder described.

As seen from the side view in Fig. 1, the piston bowl cavity 11 is formed into a circular-arc shape in a direction along streamlines of the normal tumble flow a of intake air. As appreciated from the cross section of the piston 3 shown in Fig. 1, a substantially right-hand half of the piston bowl cavity closer to the exhaust valve 6 than the intake valve is formed as a moderately sloped or curved, comparatively shallow cavity portion, while a substantially left-hand half of the piston bowl cavity 11 closer to the intake valve 5 than the exhaust valve is formed as a steeply sloped or curved, comparatively deep cavity portion. The deepest portion α of the piston bowl cavity 11 is slightly offset from the center of the piston crown (the axis of the piston 3) toward the intake valve side. The offset between the deepest portion α and the center of the piston crown, that is, the distance of the deepest portion α from the axis of the piston 3, is dimensioned so that the ratio of the offset to the cylinder bore is within a specified range of 5 to 20%. The depth of the deepest portion α, measured from the uppermost face of the piston crown of the piston 3, is dimensioned so that the ratio of the depth of the deepest portion α to the cylinder bore is within a specified range of 5 to 20%. This is because an excessively shallow piston bowl structure produces a relatively weak tumbling action, and on the contrary an excessive deep piston bowl structure results in an increase in the thickness of the piston crown, that is, increased piston-head weight. As shown in Fig. 1, the moderate curved line R1, included in the moderately sloped or curved, comparatively shallow cavity portion (see the substantially right-hand half of the piston bowl cavity 11 shown in Fig. 1), continues with the steep curved line R2, included in the steeply sloped or curved, comparatively deep cavity portion (see the substantially left-hand half of the piston bowl cavity 11 shown in Fig. 1), on the same tangential line at the deepest portion α. The radial distance β of each of diametrically-opposing cavity ends of the piston bowl cavity 11, in the direction along a substantially central streamline of tumble flow on the piston bowl cavity 11, to the edged portion of the circumference of the piston crown of the piston 3, is dimensioned so that the ratio of the radial distance β to the cylinder bore is within a specified range of 5 to 15%. The lower limit (such as 5%) of the ratio of the radial distance β to the cylinder bore is determined depending on a mechanical strength of the piston 3. On the other hand, the upper limit (such as 15%) of the ratio of the radial distance β to the cylinder bore is determined, accounting for an optimally-controlled fling-up action of air-fuel mixture caused by the normal tumble flow a. An excessively large radial distance β (at the exhaust valve side) is a difficulty to entry of the tumble flow (turned reversely along the pent-roof side combustion chamber) into the piston bowl cavity 11. Conversely, if the radial distance β (at the intake valve side) is excessively large, the fuel spray, injected from the injector 10 on the compression stroke during the stratified charge combustion mode, cannot be effectively carried on the normal tumble flow a and delivered to the vicinity of the tip of the spark plug 9. For the reasons set out above, in the improved piston structure of the embodiment, the radial distance β is dimensioned so that the ratio of the radial distance β to the cylinder bore is within the specified range of 5 to 15%. Additionally, as appreciated from the top view of Fig. 2, as per a cavity width of the piston bowl cavity 11, measured in a direction perpendicular to the direction along a substantially central streamline of normal tumble flow whose central streamline passes through the axis of the piston and extends from the exhaust-valve side to the intake-valve side, the moderately sloped or curved, comparatively shallow cavity portion of the piston bowl cavity 11 (the exhaust-valve side shallow cavity portion) is relatively wide, whereas the steeply sloped or curved, comparatively deep cavity portion of the piston bowl cavity 11 (the intake-valve side deep cavity portion) is relatively narrow. In the shown embodiment, the central cavity width γ (defined as a line segment between and including two diametrically-opposing points located on the circumferential edge of the piston bowl cavity 11 and passing through the axis of the piston 3 in the direction perpendicular to the direction along the substantially central streamline of tumble flow on the piston bowl cavity) is dimensioned so that the ratio of the central cavity width γ to the cylinder bore is within a specified range of 50 to 70%. As per a cross-sectional area of a cross section of the piston bowl cavity 11, cut in an arbitrary plane perpendicular to the direction along the substantially central stream line of tumble flow on the bowl cavity, a curvature of the piston bowl cavity 11 at each cross section, cut in the arbitrary plane, is dimensioned so that the cross-sectional area is substantially same over a specified range offsetting from the above line segment (passing the axis of the piston 3) by a predetermined distance **s** (or a predetermined offset **s**) in two opposite directions along the substantially central streamline of tumble flow on the bowl cavity 11. In the piston bowl structure of the embodiment, as seen from the top view of Fig. 2, the rightward offset **s** (or the leftward offset **s**) is dimensioned so that the ratio of the offset **s** to the cylinder bore is within a specified range of 5 to 20%. As previously discussed, the cavity width of the exhaust-valve side shallow cavity portion of the piston bowl cavity 11 is relatively wide, while the cavity width of the intake-valve side deep cavity portion of the piston bowl cavity 11 is relatively narrow. The edged portion of the circumference of the piston bowl cavity combustion chamber 11 formed in the piston crown of the piston 3 is dimensioned so that the angle δ between opposite side edged portions of the piston bowl cavity, gradually widening from the intake valve side to the exhaust valve side or gradually narrowing in the direction along the substantially central streamline of tumble flow on the bowl cavity 11, is greater than a fuel-spray angle θ of the fuel spray, injected from the injector on the compression stroke during the stratified charge combustion mode. For instance, suppose that the spray angle θ is 50 degrees, it is preferable to set the "bowl-cavity opposite-side-edges tapering angle" δ to 60 degrees.

With the previously-discussed arrangement, during a stratified charge combustion mode (a late injection combustion mode) where late fuel-injection delays the event until near the end of the compression stroke to produce a stratified air-fuel mixture, and the flame begins in a small very rich air-fuel mixture layer around the tip of the spark plug 9 and after ignition, spreads to the leaner mixture filling the rest of the combustion chamber 4, the engine of the embodiment having the improved piston bowl cavity structure produces a vertical-vortex in-cylinder normal tumble flow a within the combustion chamber 4, so that the fuel spray injected by the injector 10 is directed or delivered to the vicinity of the tip of the spark plug 9. The normal tumble flow **a** is useful to avoid spray/wall impingement between fuel spray and the wall surface of the piston ball cavity 11. Furthermore, in the engine of the embodiment, the width of the piston bowl cavity 11, functioning as a guide groove for the normal tumble flow **a**, is relatively wide at the exhaust-valve side and relatively narrow at the intake-valve side. Also, the depth of the piston bowl cavity 11 is relatively shallow at the exhaust valve side and relatively deep at the intake valve side. Therefore, as seen in Fig. 3, the piston bow cavity structure of the embodiment can smoothly and reliably carry or guide the normal tumble flow **a**, entering from the exhaust valve side into the piston bowl cavity 11, toward the intake valve side (the underside of the fuel injector 10) without overflowing the tumble flow out of the bowl cavity 11. Moreover, the piston bowl cavity structure of the embodiment allows streamlines of tumble flow on the piston bowl cavity 11 to be gradually concentrated toward within the substantially central streamline of tumble flow whose central streamline passes through the center of the piston crown of the piston 3. This produces a strong normal tumble flow directed to a desired point. Owing to the concentrated streamlines of tumble flow properly guided and concentrated by the reasonably curved recessed inner peripheral wall surface of the piston bowl cavity 11 having unique shape, dimensions and geometry, the engine of the embodiment can provide an effective fling-up action according to which fuel spray, injected from the injector 10 on the compression stroke during the stratified charge combustion mode, are flung upward and reliably directed toward the tip of the spark plug 9. Thus, by virtue of the controlled strong normal tumble flow, the fuel spray can be effectively carried to the vicinity of the tip of the spark plug 9 to certainly create the richer air/fuel mixture layer around the tip of the spark plug 9 during the stratified combustion mode. This ensures a clean, stable combustion during the stratified charge combustion mode.

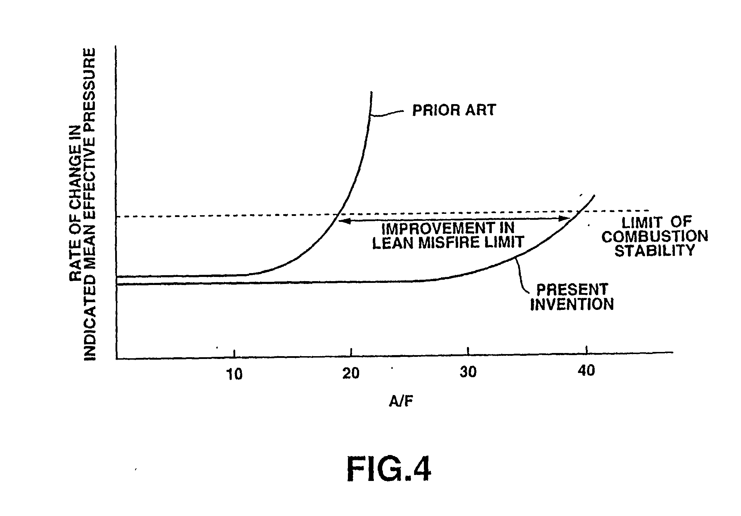

Referring now to Fig. 4, there is shown the result of comparison between a rate of change in indicated mean effective pressure obtained by the improved piston bowl cavity structure of the present invention and a rate of change in indicated mean effective pressure obtained by the conventional piston bowl cavity structure. The improved piston bowl cavity structure of the invention, can reduce the rate of change in indicated mean effective pressure at a low level even at an ultra-lean air/fuel mixture ratio AFR. That is to say, the combustion stability, particularly the stratified combustion stability can be remarkably enhanced, and thus effectively enlarging the lean misfire limit. Also, the controlled strong normal tumble flow a contributes to a good delivery of the fuel spray on the tumble flow to the vicinity of the tip of the spark plug 9. Also, with the aid of the controlled strong normal tumble flow **a**, there is less possibility of fuel film adhered to the inner wall of the bowl cavity 11. This avoids undesired carbonization from occurring due to the fuel film, and also reduces exhaust emissions (unburned hydrocarbons, and particulate matter) and deposits in the engine, thereby improving fuel economy and thus enhancing the exhaust-emission control performance. Moreover, as previously discussed, a curvature of the piston bowl cavity 11 at each cross section is dimensioned, so that the cross-sectional area of a cross section of the bowl cavity 11, arbitrarily cut in a plane perpendicular to the direction along the substantially central streamline of tumble flow on the bowl cavity, is substantially same over a specified range offsetting from the above line segment by a predetermined offset s in two opposite directions along the substantially central streamline of tumble flow on the bowl cavity 11. Thus, it is possible to more certainly reliably prevent the tumble flow from overflowing out of the bowl cavity 11. That is, the unique piston bowl cavity structure of the invention serves as an excellent tumble-flow guidance. Additionally, the edged portion of the circumference of the piston crown of the piston 3 is dimensioned, so that the angle δ between opposite side edged portions of the piston bowl cavity, gradually widening in a direction along a line extending from the intake valve side to the center of the piston crown or gradually narrowing in the direction along the substantially central streamline of tumble flow on the bowl cavity 11, is greater than a fuel-spray angle θ. Such a relatively wide angle δ between opposite side edged portions of the piston bowl cavity 11 is effective to certainly carry the fuel spray on the tumble flow, without spray/wall impingement between fuel spray and the wall surface of the piston crown (the piston top surface).

While the foregoing is a description of the preferred embodiments carried out the invention, it will be understood that the invention is not limited to the particular embodiments shown and described herein, but that various changes and modifications may be made.

## Claims

1. A direct-injection spark-ignition engine operable in at least a stratified charge combustion mode where fuel injection is executed on a compression stroke while introducing a vertical-vortex tumble flow to an induced air drawn into a combustion chamber through an intake port, comprising:
a cylinder block having a cylinder;
a piston movable through a stroke in the cylinder, and having a piston bowl cavity combustion chamber in a piston crown;
a cylinder head mounted on said cylinder block;
a spark plug centrally located at a center of the combustion chamber;
a fuel injector valve provided at a side wall portion of the combustion chamber and near an intake valve disposed in the intake port, for injecting fuel directly into the combustion chamber;
said piston bowl cavity combustion chamber being formed in the piston crown, for producing a normal tumble flow being directed toward a vicinity of said fuel injector valve and then directed toward a vicinity of said spark plug while being guided by said piston bowl cavity combustion chamber; and a width of said piston bowl cavity combustion chamber is relatively wide at an exhaust valve side and relatively narrow at an intake valve side; and a depth of said piston bowl cavity combustion chamber is relatively shallow at the exhaust valve side and relatively deep at the intake valve side.

2. The direct-injection spark-ignition engine as claimed in claim 1, wherein a curvature of said piston bowl cavity combustion chamber at each cross section, cut in an arbitrary plane perpendicular to a direction along a substantially central streamline of the normal tumble flow on said piston bowl cavity combustion chamber, is dimensioned so that the cross-sectional area of each cross section of said piston bowl cavity combustion chamber is substantially same over a specified range offsetting from a predetermined line segment by a predetermined offset in two opposite directions along the substantially central streamline of the normal tumble flow on said piston bowl cavity combustion chamber, said predetermined line segment between and including two diametrically-opposing points located on a circumferential edge of said piston bowl cavity combustion chamber and passing through an axis of said piston in the direction perpendicular to the direction along the substantially central streamline of the normal tumble flow on said piston bowl cavity combustion chamber.

3. The direct-injection spark-ignition engine as claimed in claim 2, wherein said predetermined offset is dimensioned so that a ratio of the offset to a cylinder bore is within the specified range of 5 to 20%.

4. The direct-injection spark-ignition engine as claimed in any one of preceding claims, wherein an edged portion of a circumference of said piston bowl cavity combustion chamber is dimensioned so that an angle between opposite side edged portions of said piston bowl cavity combustion chamber, gradually widening from the intake valve side to the exhaust valve side, is greater than a fuel-spray angle of fuel injected by said fuel injector valve.

5. The direct-injection spark-ignition engine as claimed in any one of preceding claims, wherein a deepest portion of said piston bowl cavity combustion chamber is offset from a center of the piston crown of said piston toward the intake valve side.

6. The direct-injection spark-ignition engine as claimed in claim 5, wherein an offset between the deepest portion and the center of the piston crown is dimensioned so that a ratio of the offset to a cylinder bore is within a specified range of 5 to 20%.

7. The direct-injection spark-ignition engine as claimed in claims 6, wherein a depth of the deepest portion is dimensioned so that a ratio of the depth of the deepest portion to the cylinder bore is within a specified range of 5 to 20%.

8. The direct-injection spark-ignition engine as claimed in claims 7, wherein a moderately curved, relatively shallow cavity portion of the exhaust valve side of the piston bowl cavity combustion chamber, continues with a steeply curved, relatively deep cavity portion of the intake valve side of the piston bowl cavity combustion chamber, on a same tangential line at the deepest portion, and a radial distance of each of diametrically-opposing cavity ends of said piston bowl cavity combustion chamber, in a direction along a substantially central streamline of the normal tumble flow on the piston bowl cavity combustion chamber, to an edged portion of a circumference of the piston crown, is dimensioned so that a ratio of the radial distance to a cylinder bore is within a specified range of 5 to 15%.

## Patentansprüche

1. Verbrennungsmotor mit Direkteinspritzung und Fremdzündung, funktionsfähig in zumindest einem Schichtladungs-Verbrennungsmodus, bei dem die Kraftstoffeinspritzung bei einem Kompressionshub ausgeführt wird, während eine Vertikalwirbelströmung der eingeleiteten Luft aufgebracht wird, die durch einen Einlassdurchgang in eine Brennkammer angesaugt wird, umfassend:
einen Zylinderblock mit einem Zylinder;
einen Kolben, der durch einen Hub im Zylinder beweglich ist, und eine Kolbenmulden-Hohlraumbrennkammer in einem Kolbenboden aufweist;
einen Zylinderkopf, der am Zylinderblock befestigt ist;
eine Zündkerze, die zentral an einer Mitte der Brennkammer angeordnet ist;
ein Kraftstoffeinspritzventil, das an einem Seitenwandbereich der Brennkammer und nahe eines in dem Einlassdurchgang angeordneten Einlassventils vorgesehen ist, um Kraftstoff direkt in die Brennkammer einzuspritzen; wobei die Kolbenmulden-Hohlraumbrennkammer in dem Kolbenboden ausgebildet ist, um einen normalen Wirbelstrom herzustellen, der in Richtung einer Nähe des Kraftstoffeinspritzventils ausgerichtet ist und dann in Richtung einer Nähe der Zündkerze ausgerichtet ist, während er von der Kolbenmulden-Hohlraumbrennkammer geführt wird; und wobei eine Breite der Kolbenmulden-Hohlraumbrennkammer an einer Abgasventilseite relativ breit ist und an einer Einlassventilseite relativ eng ist; und wobei eine Tiefe der Kolbenmulden-Hohlraumbrennkammer an der Abgasventilseite relativ flach und an der Einlassventilseite relativ tief ist.

2. Verbrennungsmotor mit Direkteinspritzung und Fremdzündung nach Anspruch 1, wobei eine Krümmung der Kolbenmulden-Hohlraumbrennkammer an jedem Querschnitt, geschnitten in einer willkürlichen Ebene senkrecht zu einer Richtung entlang einer im Wesentlichen mittigen Strömungslinie des normalen Wirbelstroms an der Kolbenmulden-Hohlraumbrennkammer, so bemessen ist, dass der Querschnittsbereich jedes Querschnitts der Kolbenmulden-Hohlraumbrennkammer im Wesentlichen gleich ist über einen festgelegten Bereich, versetzt von einem vorbestimmten Liniensegment um eine vorbestimmte Abweichung in zwei entgegengesetzten Richtungen entlang der im Wesentlichen mittigen Strömungslinie des normalen Wirbelstroms an der Kolbenmulden-Hohlraumbrennkammer, wobei das vorbestimmte Liniensegment zwischen zwei diametral gegenüberliegenden Punkten auf einer Umfangskante der Kolbenmulden-Hohlraumbrennkammer liegt und diese einschließt und durch eine Achse des Kolbens in der Richtung senkrecht zur Richtung entlang der im Wesentlichen mittigen Strömungslinie des normalen Wirbelstroms an der Kolbenmulden-Hohlraumbrennkammer verläuft.

3. Verbrennungsmotor mit Direkteinspritzung und Fremdzündung nach Anspruch 2, wobei die vorbestimmte Abweichung so bemessen ist, dass ein Verhältnis der Abweichung zu einer Zylinderbohrung innerhalb eines festgelegten Bereichs von 5 bis 20 % liegt.

4. Verbrennungsmotor mit Direkteinspritzung und Fremdzündung nach einem der vorhergehenden Ansprüche, wobei ein Randbereich eines Umfangs der Kolbenmulden-Hohlraumbrennkammer so bemessen ist, dass ein Winkel zwischen gegenüberliegenden Randbereichen der Kolbenmulden-Hohlraumbrennkammer, der von der Einlassventilseite zur Auslassventilseite allmählich größer wird, größer ist als ein Kraftstoffspritzwinkel des Kraftstoffes, der vom Kraftstoffeinspritzventil eingespritzt wird.

5. Verbrennungsmotor mit Direkteinspritzung und Fremdzündung nach einem der vorhergehenden Ansprüche, wobei ein tiefster Bereich der Kolbenmulden-Hohlraumbrennkammer von einer Mitte des Kolbenbodens des Kolbens in Richtung zur Einlassventilseite versetzt ist.

6. Verbrennungsmotor mit Direkteinspritzung und Fremdzündung nach Anspruch 5, wobei eine Abweichung zwischen dem tiefsten Bereich und der Mitte des Kolbenbodens so bemessen ist, dass ein Verhältnis der Abweichung zu einer Zylinderbohrung innerhalb eines festgelegten Bereichs von 5 bis 20 % liegt.

7. Verbrennungsmotor mit Direkteinspritzung und Fremdzündung nach Anspruch 6, wobei eine Tiefe des tiefsten Bereichs so bemessen ist, dass ein Verhältnis der Tiefe des tiefsten Bereichs zu einer Zylinderbohrung innerhalb eines festgelegten Bereichs von 5 bis 20 % liegt.

8. Verbrennungsmotor mit Direkteinspritzung und Fremdzündung nach Anspruch 7, wobei ein moderat gekrümmter, relativ flacher Hohlraumbereich der Abgasventilseite der Kolbenmulden-Hohlraumbrennkammer sich fortsetzt mit einem steil gekrümmten, relativ tiefen Hohlraumbereich der Einlassventilseite der Kolbenmulden-Hohlraumbrennkammer auf einer gleichen Tangentiallinie am tiefsten Bereich, und wobei ein radialer Abstand von jedem der diametral gegenüberliegenden Hohlraumenden der Kolbenmulden-Hohlraumbrennkammer in einer Richtung entlang einer im Wesentlichen mittigen Strömungslinie des normalen Wirbelstroms an der Kolbenmulden-Hohlraumbrennkammer zu einem Randbereich eines Umfangs des Kolbenbodens so bemessen ist, dass ein Verhältnis des radialen Abstands zu einer Zylinderbohrung innerhalb eines festgelegten Bereichs von 5 bis 15 % liegt.

## Revendications

1. Moteur à injection directe et à allumage par étincelle fonctionnant selon au moins un mode de combustion à charge stratifiée dans lequel l'injection du carburant est exécutée lors d'une course de compression tandis que l'introduction d'un écoulement à tourbillon transversal de vortex vertical vers de l'air induit tiré dans une chambre de combustion par l'intermédiaire d'un orifice d'admission, comprenant :
- un bloc cylindre possédant un cylindre;
- un piston mobile selon une course dans le cylindre et possédant une chambre de combustion à cavité de tête de piston dans une calotte de piston ;
- une culasse montée sur ledit bloc cylindre ;
- une bougie d'allumage placée au centre de la chambre de combustion ;
- une soupape d'injection de carburant prévue sur une partie de paroi latérale de la chambre de combustion et près d'une soupape d'admission placée dans l'orifice d'admission pour une injection directe du carburant dans la chambre de combustion ;
ladite chambre de combustion à cavité de tête de piston étant formée dans la calotte de piston pour produire un tourbillon transversal normal dirigé au voisinage de ladite soupape d'injection de carburant puis vers la proximité de ladite bougie d'allumage tout en étant guidé par ladite chambre de combustion à cavité de tête de piston, et une largeur de ladite chambre de combustion à cavité de tête de piston étant relativement grande du côté de la soupape d'échappement et relativement petite du côté de la soupape d'admission, et une profondeur de ladite chambre de combustion à cavité de tête de piston étant relativement faible du côté de la soupape d'échappement et relativement grande du côté de la soupape d'admission.

2. Moteur à allumage par étincelle et injection directe selon la revendication 1, dans lequel une courbure de ladite chambre de combustion à cavité de tête de piston sur chaque section transversale, dans un plan arbitraire normal à une direction le long d'une ligne de courant sensiblement centrale de taurbillon transversal normal sur ladite chambre de combustion à cavité de tête de piston est dimensionnée de telle façon que la surface de section transversale de chaque section transversale de ladite chambre de combustion à cavité de tête de piston soit sensiblement identique sur un intervalle spécifié décalé d'un segment prédéterminé de ligne d'une valeur prédéterminée dans deux directions opposées le long de la ligne de courant sensiblement centrale de tourbillon transversal normal sur ladite chambre de combustion à cavité de tête de piston, ledit segment linéaire prédéterminé étant interposé et comprenant deux points diamétralement opposés situés sur un bord de circonférence de ladite chambre de combustion à cavité de tête de piston et traversant un axe dudit piston dans la direction normale à celle le long de la ligne de courant sensiblement centrale de tourbillon transversal normal sur ladite chambre de combustion à cavité de tête de piston.

3. Moteur à allumage par étincelle et injection directe selon la revendication 2, dans lequel ledit décalage prédéterminé est dimensionné de telle façon qu'un rapport du décalage sur un alésage de cylindre soit compris de façon spécifique entre 5 et 20%.

4. Moteur à allumage par étincelle et injection directe selon l'une quelconque des revendications précédentes, dans lequel une partie d'arête d'une circonférence de ladite chambre de combustion à cavité de tète de piston est dimensionnée de telle façon qu'un angle entre des parties d'arête de côté opposé de ladite chambre de combustion à cavité de tête de piston, s'élargissant progressivement du coté de la soupape d'admission vers le côté de la soupape d'échappement, soit plus grand qu'un angle de pulvérisation du carburant injecté par ladite soupape d'injection de carburant.

5. Moteur à allumage par étincelle et injection directe selon l'une quelconque des revendications précédentes, dans lequel une partie la plus protonde de ladite chambre de combustion à cavité de tête de piston est décalée du centre de la calotte de piston dudit piston vers le côté de la soupape d'admission.

6. Moteur à allumage par étincelle et injection directe selon la revendication 5, dans lequel un décalage entre la partie la plus profonde et le centre de la calotte de piston est dimensionné de telle façon qu'un rapport du décalage sur un alésage de cylindre soit compris dans un intervalle spécifié de 5 à 20%.

7. Moteur à allumage par étincelle et injection directe selon la revendication 6, dans lequel une profondeur de la partie la plus profonde est dimensionnée de telle façon qu'un rapport de la profondeur de la partie la plus profonde sur l'alésage de cylindre soit compris dans un intervalle spécifié de 5 à 20%.

8. Moteur à allumage par étincelle et injection directe selon la revendication 7, dans lequel une partie de cavité de courbure modérée et relativement peu profonde du côté de la soupape d'échappement de la chambre de combustion à cavité de tète de piston se poursuit par une partie de cavité à forte courbure et relativement profonde du côté de la soupape d'admission de la chambre de combustion à cavité de tête de piston sur une même tangente de la partie la plus profonde, et une distance radiale de chacune des extrémités diamétralement opposées de cavité de ladite chambre de combustion à cavité de tête de piston dans une direction le long d'une ligne de courant sensiblement centrale du tourbillon transversal normal sur la chambre de combustion à cavité de tête de piston, vers une partie d'arête d'une circonférence de la calotte de piston est dimensionnée de telle façon qu'un rapport de la distance radiale sur un alésage de cylindre soit compris dans un intervalle spécifié de 5 à 15%.
